(19) Europäisches Patentamt / European Patent Office / Office européen des brevets

(11) **EP 3 133 535 B1**

(12) **FASCICULE DE BREVET EUROPEEN**

(45) Date de publication et mention
de la délivrance du brevet:
**04.09.2019   Bulletin 2019/36**

(51) Int Cl.:
***G06N 3/063*** *(2006.01)*   ***G06N 3/08*** *(2006.01)*

(21) Numéro de dépôt: **16183701.8**

(22) Date de dépôt: **11.08.2016**

(54) **PROCEDE DE PROGRAMMATION D'UN RESEAU DE NEURONES ARTIFICIELS**

PROGRAMMIERVERFAHREN EINES NETZES AUS KÜNSTLICHEN NEURONEN

METHOD FOR PROGRAMMING AN ARTIFICIAL NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.08.2015   FR 1557781**

(43) Date de publication de la demande:
**22.02.2017   Bulletin 2017/08**

(73) Titulaire: **COMMISSARIAT À L'ÉNERGIE ATOMIQUE ET AUX ÉNERGIES ALTERNATIVES**
**75015 Paris (FR)**

(72) Inventeurs:
 • **VIANELLO, Elisa**
 **38000 GRENOBLE (FR)**
 • **BICHLER, Olivier**
 **91300 MASSY (FR)**

(74) Mandataire: **Cabinet Camus Lebkiri**
**25 rue de Maubeuge**
**75009 Paris (FR)**

(56) Documents cités:
 **EP-A1- 2 765 575      EP-A1- 2 765 577**
 **US-A1- 2013 242 642**

 • **MANAN SURI ET AL: "Bio-Inspired Stochastic Computing Using Binary CBRAM Synapses", IEEE TRANSACTIONS ON ELECTRON DEVICES, IEEE SERVICE CENTER, PISCATAWAY, NJ, US, vol. 60, no. 7, 1 juillet 2013 (2013-07-01), pages 2402-2409, XP011515274, ISSN: 0018-9383, DOI: 10.1109/TED.2013.2263000**

 • **D. GARBIN ET AL: "On the impact of OxRAM-based synapses variability on convolutional neural networks performance", PROCEEDINGS OF THE 2015 IEEE/ACM INTERNATIONAL SYMPOSIUM ON NANOSCALE ARCHITECTURES (NANOARCH'15), 8 juillet 2015 (2015-07-08), pages 193-198, XP055274483, DOI: 10.1109/NANOARCH.2015.7180611 ISBN: 978-1-4673-7849-9**

 • **SURI MANAN ET AL: "Impact of PCM resistance-drift in neuromorphic systems and drift-mitigation strategy", 2013 IEEE/ACM INTERNATIONAL SYMPOSIUM ON NANOSCALE ARCHITECTURES (NANOARCH), IEEE, 15 juillet 2013 (2013-07-15), pages 140-145, XP032498572, DOI: 10.1109/NANOARCH.2013.6623059**

 • **SURI M ET AL: "CBRAM devices as binary synapses for low-power stochastic neuromorphic systems: Auditory (Cochlea) and visual (Retina) cognitive processing applications", 2012 INTERNATIONAL ELECTRON DEVICES MEETING (IEDM 2012) : SAN FRANCISCO, CALIFORNIA, USA, 10 - 13 DECEMBER 2012, IEEE, PISCATAWAY, NJ, 10 décembre 2012 (2012-12-10), pages 10.3.1-10.3.4, XP032341709, DOI: 10.1109/IEDM.2012.6479017 ISBN: 978-1-4673-4872-0**

 • **Olivier Bichler: "Implémentations matérielles sur des technologies memristives", Contribution à la conception d'architecture de calcul auto-adaptative intégrant des nanocomposants neuromorphiques et applications potentielles, 14 novembre 2012 (2012-11-14), pages 105-141, XP055110632, Extrait de l'Internet: URL:http://tel.archives-ouvertes.fr/tel-00 781811 [extrait le 2014-03-28]**

- B. DESALVO ET AL: "Emerging resistive memories for low power embedded applications and neuromorphic systems", 2015 IEEE INTERNATIONAL SYMPOSIUM ON CIRCUITS AND SYSTEMS (ISCAS), 1 mai 2015 (2015-05-01), pages 3088-3091, XP055274476, DOI: 10.1109/ISCAS.2015.7169340 ISBN: 978-1-4799-8391-9

**Description**

**DOMAINE TECHNIQUE DE L'INVENTION**

Le domaine technique de l'invention est celui des réseaux de neurones artificiels, ou circuits neuromorphiques. La présente invention concerne un procédé de programmation d'un réseau de neurones artificiels.

**ARRIERE-PLAN TECHNOLOGIQUE DE L'INVENTION**

Dans le domaine des technologies de l'information et de la communication, les réseaux de neurones artificiels font l'objet d'un grand intérêt. Un réseau de neurones artificiels s'inspire du fonctionnement du cerveau humain et comprend une pluralité de neurones artificiels et une pluralité de synapses artificielles. Le cerveau humain comprend environ $10^{11}$ neurones et $10^{15}$ synapses, chaque neurone étant connecté à d'autres neurones via environ $10^3$ à $10^4$ synapses.

En raison du grand nombre de connexions interneuronales, les synapses artificielles représentent la majeure partie d'un circuit neuromorphique. C'est pourquoi simplifier et réduire la taille des synapses artificielles est un enjeu important.

Le rôle d'une synapse artificielle est d'être une connexion pour la communication entre deux neurones. Une synapse artificielle doit donc présenter une conductance électriquement réglable. Pour réaliser des synapses artificielles au sein de circuits neuromorphiques, il a ainsi été proposé d'utiliser des mémoires vives résistives, et en particulier des mémoires vives résistives de type OxRRAM (de l'anglais « Oxide Resistive Random Access Memory ») ou des mémoires vives résistives de type CBRAM (de l'anglais « Conductive Bridge Random Access Memory »). Les mémoires vives résistives de type OxRRAM et les mémoires vives résistives de type CBRAM sont en effet aptes à simuler le comportement des synapses biologiques, c'est-à-dire à moduler la force des connexions inter-neuronales.

Afin de réaliser une synapse artificielle à partir de mémoires vives résistives de type OxRRAM ou de type CBRAM, deux approches sont notamment connues : une approche analogique et une approche binaire.

Selon l'approche analogique, on utilise une seule mémoire vive résistive de type OxRRAM ou de type CBRAM par synapse artificielle et on exploite au moins trois états résistifs de ladite mémoire vive résistive, au moyen d'impulsions électriques d'amplitude et/ou de durée variables générées par chaque neurone. Cette approche analogique classique, qui implique l'utilisation d'au moins trois types d'impulsions électriques, requiert toutefois l'utilisation d'une électronique complexe. Chaque état résistif exploité nécessite en effet l'utilisation d'un type particulier d'impulsions électriques, chaque type d'impulsions électriques ayant une amplitude et une durée particulières.

Selon l'approche binaire, on utilise pour chaque synapse artificielle une pluralité de mémoires vives résistives de type OxRRAM ou de type CBRAM fonctionnant en parallèle et on n'exploite que deux états résistifs de chaque mémoire vive résistive : un état fortement résistif, dit état HRS (de l'anglais « High Resistive State ») ou état « OFF », et un état faiblement résistif dit état LRS (de l'anglais « Low Resistive State ») ou état « ON ». On obtient de cette manière un fonctionnement multi-niveaux, permettant effectivement de moduler une connexion inter-neuronale, tout en n'utilisant que deux types d'impulsions électriques. L'utilisation d'une pluralité de mémoires vives résistives au sein de chaque synapse artificielle implique toutefois une augmentation de la taille de chaque synapse artificielle, par rapport à une synapse artificielle n'utilisant qu'une seule mémoire vive résistive selon l'approche analogique.

Le document « Bio-inspired stochastic computing using binary CBRAM synapses », M. Suri et al., IEEE Transactions on Electron Devices, Vol. 60, No. 7, July 2013, est connu de l'art antérieur, qui concerne un procédé de programmation d'un réseau de neurones artificiels ayant une pluralité de synapses artificielles, chaque synapse artificielle étant une unique mémoire vive résistive utilisant deux intervalles de conductance.

**RESUME DE L'INVENTION**

L'invention offre une solution aux problèmes évoqués précédemment, en proposant un procédé de programmation d'un réseau de neurones artificiels dans lequel on utilise une unique mémoire vive résistive par synapse artificielle tout en n'utilisant au maximum que deux types d'impulsions électriques de programmation.

Un aspect de l'invention concerne un procédé de programmation d'un réseau de neurones artificiels ayant une pluralité de synapses artificielles, chaque synapse artificielle étant une unique mémoire vive résistive, telle qu'une mémoire OxRAM ou CBRAM, en série avec un moyen de limitation de courant, la mémoire vive résistive comportant une zone active et des première et deuxième électrodes de part et d'autre de la zone active, le procédé de programmation comportant les étapes suivantes :

- une étape de détermination d'un nombre N d'intervalles de conductance, avec N un entier naturel supérieur ou égal à 3 ;
- pour chaque mémoire vive résistive :

  ◦ une étape de choix d'un intervalle de conductance parmi les N intervalles de conductance précédemment déterminés ;
  ◦ une étape i) comprenant :

    ▪ une première sous-étape d'application d'une impulsion de tension d'un premier type entre les première et deuxième électrodes de ladite mémoire vive résistive, l'impulsion de tension du premier type ayant une première durée et une première amplitude, et

■ une deuxième sous-étape de lecture d'une valeur de conductance de ladite mémoire vive résistive ;

∘ si ladite valeur de conductance n'appartient pas à l'intervalle de conductance précédemment choisi, une étape ii) comprenant :

■ une première sous-étape d'application d'une impulsion de tension d'un deuxième type entre les première et deuxième électrodes de ladite mémoire vive résistive, l'impulsion de tension du deuxième type ayant une deuxième durée et une deuxième amplitude, et
■ une deuxième sous-étape de lecture d'une valeur de conductance de ladite mémoire vive résistive ;

∘ si ladite valeur de conductance n'appartient pas à l'intervalle de conductance choisi, une étape selon laquelle on réitère l'étape i), les étapes i) et ii) étant répétées jusqu'à ce que la valeur de conductance de la mémoire vive résistive appartienne à l'intervalle de conductance choisi ; chaque impulsion de tension du premier type appliquée lors de chaque étape i) ayant la même première durée et la même première amplitude, et chaque impulsion de tension du deuxième type appliquée lors de chaque étape ii) ayant la même deuxième durée et la même deuxième amplitude.

Grâce à l'invention, on exploite avantageusement la dispersion, pour un courant de programmation donné, des états résistifs d'une mémoire vive résistive sur une plage de résistance. La dispersion des états résistifs d'une mémoire vive résistive peut désigner la dispersion des états faiblement résistifs LRS et/ou la dispersion des états fortement résistifs HRS. La résistance étant l'inverse de la conductance, il existe une plage de conductance correspondant à la ladite plage de résistance. Chacun des N intervalles de conductance est choisi parmi ladite plage de conductance. A chaque intervalle de conductance correspond donc un intervalle de résistance, l'intervalle de résistance comprenant au moins un état résistif de la mémoire vive résistive.
On considère une première mémoire vive résistive : pour cette première mémoire vive résistive, on choisit un intervalle de conductance parmi les N intervalles de conductance. Il s'agit ensuite de programmer ladite première mémoire vive résistive de manière qu'elle présente une conductance appartenant à l'intervalle de conductance préalablement choisi. Pour ce faire, l'impulsion de tension du premier type est appliquée à la première mémoire vive résistive selon la première sous-étape de l'étape i). La deuxième sous-étape de l'étape i) permet de déterminer si la première mémoire vive résistive présente, à l'issue de l'application de l'impulsion de tension du premier type, l'intervalle de conductance préalablement choisi. Si la première mémoire vive résistive présente effectivement l'intervalle de conductance choisi, la programmation de ladite première mémoire vive résistive est terminée. Si la première mémoire vive résistive ne présente pas l'intervalle de conductance choisi, l'impulsion de tension du deuxième type est appliquée à la première mémoire vive résistive selon la première sous-étape de l'étape ii). La deuxième sous-étape de l'étape ii) permet de déterminer si la première mémoire vive résistive présente, à l'issue de l'application de l'impulsion de tension du deuxième type, l'intervalle de conductance préalablement choisi. Si la première mémoire vive résistive présente effectivement l'intervalle de conductance choisi, la programmation de ladite première mémoire vive résistive est terminée. Si la première mémoire vive résistive ne présente pas l'intervalle de conductance choisi, l'étape i) est répétée.
Durant le procédé, le courant de programmation est fixé par le moyen de limitation de courant. La dispersion des états résistifs sur une plage de résistance et le choix des intervalles de conductance sur une plage de conductance correspondant à la plage de résistance permet d'affirmer que la première mémoire vive résistive est, à un moment donné, effectivement programmée de sorte qu'elle présente une conductance appartenant à l'intervalle de conductance choisi.
Outre les caractéristiques qui viennent d'être évoquées dans le paragraphe précédent, le procédé de programmation d'un réseau de neurones artificiels selon un aspect de l'invention peut présenter une ou plusieurs caractéristiques complémentaires parmi les suivantes, considérées individuellement ou selon toutes les combinaisons techniquement possibles :

- Le moyen de limitation de courant est choisi de manière que le courant traversant la mémoire vive résistive appartienne à la zone de courant pour laquelle la mémoire vive résistive présente une unique plage continue de conductance.

- Chaque mémoire vive résistive est une mémoire de type OxRAM.

- Alternativement, chaque mémoire vive résistive est une mémoire de type CBRAM.

- On choisit le moyen de limitation de courant de chaque synapse artificielle de manière que le courant traversant chaque mémoire vive résistive est supérieur à 1 $\mu$A et inférieur ou égal à 20 $\mu$A.

- L'impulsion de tension du deuxième type est de signe opposé à l'impulsion de tension du premier type. Cette caractéristique permet l'utilisation d'une mémoire vive résistive bipolaire.

- Alternativement, l'impulsion de tension du deuxième type est de même signe que l'impulsion de tension du premier type. Cette caractéristique permet alternativement l'utilisation d'une mémoire vive résistive unipolaire.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique d'un réseau de neurones artificiels.
- La figure 2a montre une représentation schématique d'une mémoire vive résistive.
- La figure 2b montre une représentation schématique d'une synapse artificielle comportant une mémoire vive résistive et un moyen de limitation de courant.
- La figure 2c montre un graphique d'une fonction de distribution cumulative des états résistifs d'une mémoire vive résistive.
- La figure 3 montre un graphique de la dispersion des états faiblement résistifs et de la dispersion des états fortement résistifs d'une mémoire vive résistive, en fonction du courant circulant dans la mémoire vive résistive.
- La figure 4 montre un graphique des valeurs de conductance obtenues pour une mémoire vive résistive en fonction du nombre de cycles d'une impulsion de tension d'un premier type et d'une impulsion de tension d'un deuxième type réalisés.
- La figure 5 montre une représentation schématique d'une pluralité d'intervalles de conductance déterminés sur une plage de conductance d'une mémoire vive résistive.
- La figure 6 montre un diagramme des étapes d'un procédé de programmation d'un réseau de neurones artificiels selon un mode de réalisation de l'invention.
- La figure 7 montre un graphique du nombre d'impulsions de tension nécessaires pour atteindre un intervalle de conductance donné d'une mémoire vive résistive.

## DESCRIPTION DETAILLEE D'AU MOINS UN MODE DE REALISATION DE L'INVENTION

Sauf précision contraire, un même élément apparaissant sur des figures différentes présente une référence unique.

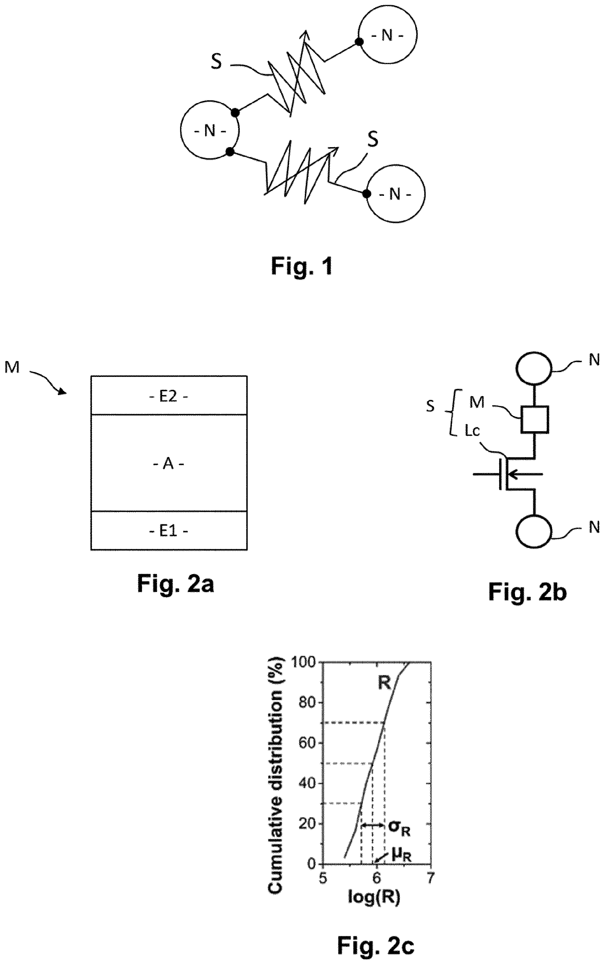

La figure 1 montre une représentation schématique d'un réseau de neurones artificiels. La figure 2a montre une représentation schématique d'une mémoire vive résistive M. La figure 2b montre une représentation schématique d'une synapse artificielle S comportant une mémoire vive résistive M et un moyen de limitation de courant Lc.

Les figures 1, 2a et 2b sont décrites conjointement.

Le réseau de la figure 1 comporte :

- une pluralité de neurones artificiels N, et
- une pluralité de synapses artificielles S.

Chaque synapse artificielle S connecte deux neurones artificiels N entre eux. Chaque neurone artificiel N est connecté à au moins un autre neurone artificiel N. Chaque neurone artificiel N peut être connecté à plusieurs autres neurones artificiels N.

Un paramètre important d'un réseau de neurones artificiels est notamment la conductance de chaque synapse artificielle. Un réseau de neurones artificiels présente typiquement une phase d'apprentissage durant laquelle la conductance de chaque synapse artificielle est définie. Cette phase d'apprentissage peut notamment être une phase d'apprentissage supervisé (« off-line learning » en anglais) ou une phase d'apprentissage non-supervisé (« on-line learning » en anglais). Lors d'une phase d'apprentissage non-supervisé, chaque conductance synaptique est déterminée in situ. Lors d'une phase d'apprentissage supervisé au contraire, chaque conductance synaptique est déterminée en amont grâce à des simulations informatiques, puis importée dans le réseau lors d'une unique étape de programmation. Le procédé de programmation d'un réseau de neurones artificiels selon un aspect de l'invention concerne plus particulièrement un procédé de programmation d'un réseau de neurones artificiels au moyen d'une technique d'apprentissage supervisé.

Chaque synapse artificielle S comporte une unique mémoire vive résistive M en série avec un moyen de limitation de courant Lc. Le moyen de limitation de courant peut par exemple être une résistance ou un transistor. L'avantage d'utiliser un transistor par rapport à une résistance est de pouvoir contrôler le niveau de limitation de courant à l'aide de la tension de grille.

La mémoire vive résistive M comporte :

- une zone active A,
- une première électrode E1 et une deuxième électrode E2, les première et deuxième électrodes E1 et E2 étant agencées de part et d'autre de la zone active A.

La mémoire vive résistive M présente typiquement une pluralité d'états faiblement résistifs LRS et une pluralité d'états hautement résistifs HRS. La pluralité d'états faiblement résistifs LRS présente typiquement une première dispersion et la pluralité d'états hautement résistifs HRS présente typiquement une deuxième dispersion. On considère une fonction de distribution cumulative des états résistifs, ou résistances, de la mémoire vive résistive M. Un exemple d'une telle fonction de distribution cumulative est par exemple illustré à la figure 2c. Dans le présent document, on entend par « dispersion des états résistifs », ou « variabilité des états résistifs », l'intervalle entre les valeurs des états résistifs à 30% et 70% de ladite distribution cumulée. Dans l'exemple particulier de la figure 2c, la dispersion est ainsi repérée par le symbole $\sigma_R$. Le passage de la mémoire vive résistive M d'un état hautement résistif HRS à un état faiblement résistif LRS est typiquement obtenu lors d'une étape dite « de SET », en appliquant une impulsion de tension de SET entre les bornes des première et deuxième électrodes E1 et E2 de la mémoire vive résistive M. Le passage de la mémoire vive résistive M d'un état faiblement résistif LRS à un état hautement résistif HRS est typiquement obtenu lors d'une étape dite « de RESET », en appliquant une impulsion de tension de RESET entre les bornes des première et deuxième électrodes E1 et E2 de la mémoire vive résistive M. L'impulsion de tension de RESET présente une durée qui est typiquement différente de la durée de l'impulsion de tension de SET. L'impulsion de tension de RESET présente une amplitude qui est typiquement différente de l'amplitude de l'impulsion de SET. L'impulsion de tension de SET et l'impulsion de RESET peuvent toutefois dans certains cas présenter une même durée et/ou une même amplitude. Dans le cas typique d'une mémoire vive résistive de type bipolaire, l'impulsion de tension de RESET est de signe opposé à l'impulsion de SET ; l'impulsion de SET est typiquement positive tandis que l'impulsion de RESET est typiquement négative. Dans le cas alternatif d'une mémoire vive résistive de type unipolaire, l'impulsion de tension de SET et l'impulsion de tension de SET sont de même signe.

Selon une première alternative, la mémoire vive résistive M peut être une mémoire vive résistive de type OxRRAM (de l'anglais « Oxide Resistive Random Access Memory »). Selon cette première alternative, la zone active A comprend un matériau actif à base d'oxyde, tel qu'un oxyde binaire d'un métal de transition. Les première et deuxième électrodes E1 et E2 agencées de part et d'autre de la zone active A sont deux électrodes métalliques. Une mémoire vive résistive M de type OxRRAM est donc une structure métal-oxyde-métal (« metal-insulator-metal » en anglais).

Selon une deuxième alternative, la mémoire vive résistive M peut être une mémoire vive résistive de type CBRAM (de l'anglais « Conductive Bridge Random Access Memory »). Selon cette deuxième alternative :

- la zone active A comprend un matériau à conduction ionique formant un électrolyte solide à conduction ionique,
- la première électrode E1 forme une cathode inerte, et

- la deuxième électrode E2 comporte une portion de métal ionisable, c'est-à-dire une portion de métal pouvant facilement former des ions métalliques, et forme une anode soluble.

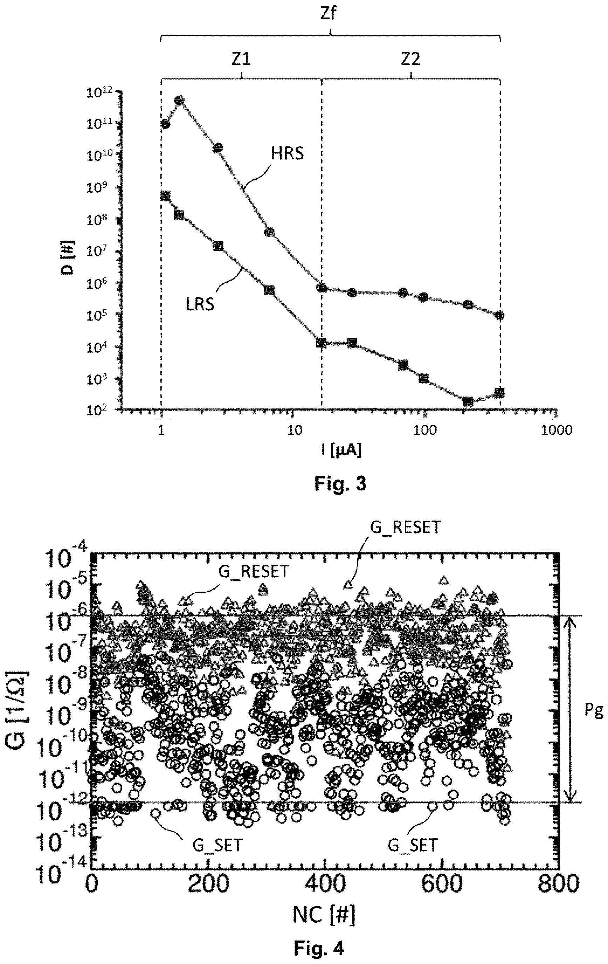

La figure 3 montre un graphique de la dispersion D des états faiblement résistifs LRS et des états fortement résistifs HRS d'une mémoire vive résistive M, en fonction du courant I circulant dans la mémoire vive résistive M. La figure 3 montre une région Zf de courant de fonctionnement de la mémoire vive résistive M. La région Zf comporte une première zone Z1 et une deuxième zone Z2. Les courants de la première zone Z1 sont plus faibles que les courants de la deuxième zone Z2.

La deuxième zone Z2 permet un fonctionnement « classique » d'une mémoire vive résistive, selon lequel la mémoire vive résistive est apte à passer d'un état faiblement résistif LRS, ou état « ON », à un état hautement résistif HRS, ou état « OFF », et vice versa, l'état faiblement résistif LRS et l'état hautement résistif HRS étant distincts l'un de l'autre. On entend par « distincts l'un de l'autre » le fait qu'il existe une plage de résistance qui sépare la pluralité d'états faiblement résistifs LRS d'une part et la pluralité d'états hautement résistifs HRS d'autre part, ladite plage de résistance ne comportant aucun état faiblement résistif et aucun état hautement résistif. La première dispersion des états faiblement résistifs LRS et la deuxième dispersion des états hautement résistifs HRS ne se recouvrent pas.

La première zone Z1 ne permet pas le fonctionnement classique, précédemment décrit, d'une mémoire vive résistive. En effet, dans la première zone Z1, la première dispersion des états faiblement résistifs LRS et la deuxième dispersion des états hautement résistifs HRS se recouvrent. Autrement dit, dans la première zone Z1, la résistance d'une mémoire vive résistive dans un état « faiblement » résistif LRS obtenu après l'application d'une impulsion de SET peut être supérieure ou égale à la résistance de ladite mémoire vive résistive dans un état « hautement » résistif HRS obtenu après l'application d'une impulsion de RESET.

La figure 4 montre un graphique des valeurs G de conductance obtenues pour une mémoire vive résistive M dans la première zone Z1 de courant précédemment décrite, en fonction du nombre NC de cycles d'une impulsion de tension de SET et d'une impulsion de tension de RESET réalisés. Chaque valeur de conductance G_SET obtenue après une étape de SET est représentée par un marqueur rond sur la figure 4. Chaque valeur de conductance G_RESET obtenue après une étape de RESET est représentée par un marqueur triangle sur la figure 4. La figure 4 illustre le recouvrement, précédemment décrit, de la première dispersion des états faiblement résistifs LRS et de la deuxième dispersion des états hautement résistifs HRS lorsque la mémoire vive résistive M est utilisée dans la première zone Z1 de courant. Lorsque la mémoire vive résistive M est utilisée dans la première zone Z1 de courant, la mémoire vive résistive M présente une unique plage, continue, de conductance Pg. Dans l'exemple particulier de la figure 4, la plage de conductance Pg s'étend environ entre $10^{-12}$ $\Omega^{-1}$ et $10^{-6}$ $\Omega^{-1}$, c'est-à-dire sur six ordres de grandeurs.

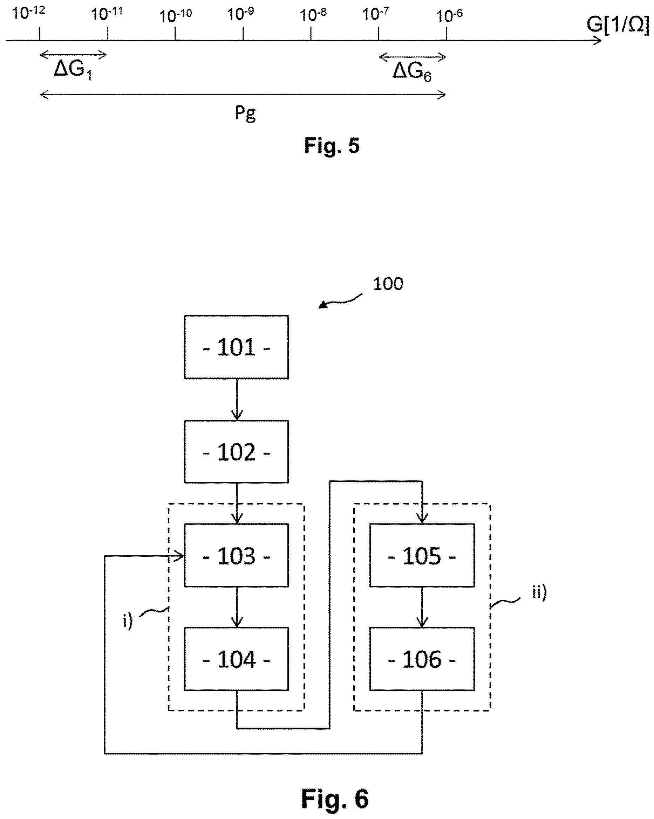

La figure 5 montre une représentation schématique d'une pluralité d'intervalles de conductance déterminés sur une plage de conductance d'une mémoire vive résistive. Dans l'exemple particulier de la figure 5, la plage de conductance Pg de la figure 4 est divisée en six intervalles de conductance :

- un premier intervalle de conductance $\Delta G_1$ tel que :

$$10^{-12}\Omega^{-1} \leq \Delta G_1 < 10^{-11}\Omega^{-1}$$

- un deuxième intervalle de conductance $\Delta G_2$ tel que :

$$10^{-11}\Omega^{-1} \leq \Delta G_2 < 10^{-10}\Omega^{-1}$$

- un troisième intervalle de conductance $\Delta G_3$ tel que :

$$10^{-10}\Omega^{-1} \leq \Delta G_3 < 10^{-9}\Omega^{-1}$$

- un quatrième intervalle de conductance $\Delta G_4$ tel que :

$$10^{-9}\Omega^{-1} \leq \Delta G_4 < 10^{-8}\Omega^{-1}$$

- un cinquième intervalle de conductance $\Delta G_5$ tel que :

$$10^{-8}\Omega^{-1} \leq \Delta G_5 < 10^{-7}\Omega^{-1}$$

- et un sixième intervalle de conductance $\Delta G_6$ tel que :

$$10^{-7}\Omega^{-1} \leq \Delta G_6 < 10^{-6}\Omega^{-1}$$

Dans l'exemple particulier de la figure 5, la plage de conductance Pg est divisée en des intervalles de conductance de même taille ou étendue. Alternativement, la plage de conductance Pg pourrait être divisée en des intervalles de conductance de tailles ou étendues différentes.

La figure 6 montre un diagramme des étapes d'un procédé 100 de programmation d'un réseau de neurones artificiels N selon un mode de réalisation de l'invention, le réseau de neurones artificiels N ayant une pluralité de synapses artificielles S, chaque synapse artificielle S étant une unique mémoire vive résistive M, telle qu'une mémoire OxRAM ou CBRAM, en série avec un moyen de limitation de courant, la mémoire vive résistive M comportant une zone active A et des première et deuxième électrodes E1, E2 de part et d'autre de la zone active.

Un réseau de neurones artificiels N compatible avec la présente invention a été précédemment décrit en lien avec la figure 1. Une mémoire vive résistive M compatible avec la présente invention a été précédemment décrite en lien avec la figure 2a. Selon le procédé 100 de programmation d'un réseau de neurones artificiels, le moyen de limitation de courant de chaque synapse artificielle S peut être choisi de manière que le courant traversant chaque mémoire vive résistive M appartienne à la deuxième zone Z2 de courant, précédemment décrite en lien avec la figure 3. Toutefois, selon le procédé 100 de programmation d'un réseau de neurones artificiels, le moyen de limitation de courant de chaque synapse artificielle S est préférentiellement choisi de manière que le courant traversant chaque mémoire vive résistive M appartienne à la première zone Z1 de courant, précédemment décrite en lien avec la figure 3.

Selon une étape non illustrée, on détermine des conditions de programmation optimales, au sens de la présente invention, d'une mémoire vive résistive M. Un exemple de détermination des conditions de programmation optimales d'une mémoire vive résistive M est illustré à la figure 3, qui a été précédemment décrite. La figure 3 montre que la dispersion des états faiblement résistifs LRS et la dispersion des états hautement résistifs HRS dépendent toutes les deux du courant de programmation I. Plus le courant de programmation I est faible, plus la dispersion des états faiblement résistifs LRS et des états hautement résistifs HRS est grande. Des conditions de programmations optimales selon la présente invention comprennent ainsi un courant de programmation I appartenant à la première zone Z1, telle que précédemment définie. Dans ce cas, le moyen de limitation de courant de chaque synapse artificielle S est choisi ou réglé de manière que le courant traversant chaque mémoire vive résistive appartienne à la première zone Z1. La première zone Z1 peut typiquement être telle que :

$$1\,\mu A \ < \ Z1 \ \leq \ 20\,\mu A$$

L'encadrement précédent est donné à titre indicatif. D'une manière générale, la première zone Z1 est, au sein d'une région Zf de fonctionnement, la zone de courant pour laquelle une mémoire vive résistive M présente la plus grande variabilité d'états résistifs, de manière qu'il y ait un recouvrement entre les états faiblement résistifs et les états hautement résistifs de ladite mémoire vive résistive M et que ladite mémoire vive résistive M présente une unique plage continue de conductance, ainsi que précédemment décrit en lien avec la figure 4.

L'étape de détermination de conditions de programmation optimales qui vient d'être décrite est optionnelle. En effet, le procédé 100 de programmation d'un réseau de neurones artificiels selon un aspect de l'invention peut alternativement utiliser un courant de programmation I appartenant à la deuxième zone Z2, telle que précédemment définie. Dans ce cas, le moyen de limitation de courant de chaque synapse artificielle S est choisi ou réglé de manière que le courant traversant chaque mémoire vive résistive appartienne à la deuxième zone Z2 de courant. Lorsque le courant de programmation I appartient à la deuxième zone Z2 de courant, la mémoire vive résistive présente deux plages distinctes, discontinues, de conductance.

Selon une autre étape non illustrée, on détermine une plage de conductance de la mémoire vive résistive M, pour un courant de programmation donné. Comme précédemment expliqué, le courant de programmation appartient avantageusement à la première zone Z1 telle que précédemment définie. Alternativement, le courant de programmation peut toutefois appartenir à la deuxième zone Z2 telle que précédemment définie. Le courant de programmation appartient, dans un cas comme dans l'autre, à une zone de fonctionnement Zf de la mémoire vive résistive M. Un exemple de détermination d'une plage de conductance d'une mémoire vive résistive M, pour un courant de programmation donné, est illustré à la figure 4, qui a été précédemment décrite. Dans l'exemple particulier de la figure 4, on réalise un cyclage d'impulsions de tension de SET et de RESET pour déterminer une plage de conductance d'une mémoire vive résistive M, pour un courant de programmation de 6 $\mu$A. Dans l'exemple particulier de la figure 4, le courant de programmation de 6 $\mu$A est un courant de programmation optimal, qui a été déterminé lors de l'étape optionnelle de détermination de conditions de programmation optimales précédemment décrite. Dans l'exemple particulier de la figure 4, la mémoire vive résistive M présente une plage de conductance Pg comprise entre $10^{-12}$ $\Omega^{-1}$ et $10^{-6}$ $\Omega^{-1}$.

Selon une étape 101 du procédé 100, on détermine un nombre N d'intervalles de conductance, où N est un entier naturel supérieur ou égal à 3. La figure 5, précédemment décrite, montre un exemple de détermination d'un nombre N d'intervalles de conductance selon l'étape 101.

Pour chaque mémoire vive résistive M du réseau de neurones artificiels, on réalise selon une étape 102 un choix d'un intervalle de conductance parmi les N intervalles de conductance précédemment déterminés lors de l'étape 101. Le choix d'un intervalle de conductance correspond au choix d'une conductance synaptique lors d'une phase d'apprentissage supervisé.

Pour chaque mémoire vive résistive M du réseau de neurones artificiels, on réalise alors une étape i) comprenant :

- une première sous-étape 103 selon laquelle on applique une impulsion de tension d'un premier type entre les première et deuxième électrodes E1, E2 de ladite mémoire vive résistive M, l'impulsion de tension du premier type ayant une première durée et une première amplitude, et

- une deuxième sous-étape 104 selon laquelle on lit une valeur de conductance de ladite mémoire vive résistive M.

L'impulsion de tension d'un premier type peut être une impulsion de SET. Alternativement, l'impulsion de tension d'un premier type peut également être une impulsion de RESET.

Si la valeur de conductance qui est lue lors de la deuxième sous-étape 104 de l'étape i) appartient à l'intervalle de conductance précédemment choisi, la programmation de la mémoire vive résistive considérée est terminée. Si en revanche ladite valeur de conductance n'appartient pas à l'intervalle de conductance précédemment choisi, on réalise une étape ii) comprenant :

- une première sous-étape 105 d'application d'une impulsion de tension d'un deuxième type entre les première et deuxième électrodes E1, E2 de ladite mémoire vive résistive M, l'impulsion de tension du deuxième type ayant une deuxième durée et une deuxième amplitude, et
- une deuxième sous-étape 106 de lecture d'une valeur de conductance de ladite mémoire vive résistive M.

Si l'impulsion de tension d'un premier type était une impulsion de SET, alors l'impulsion de tension d'un deuxième type est typiquement une impulsion de RESET. Si l'impulsion de tension d'un premier type était une impulsion de RESET, alors l'impulsion de tension d'un deuxième type est typiquement une impulsion de SET. La deuxième durée de l'impulsion de tension d'un deuxième type peut être identique à la première durée de l'impulsion de tension d'un premier type. La deuxième amplitude de l'impulsion de tension d'un deuxième type peut être identique à la première amplitude de l'impulsion de tension d'un premier type. Dans le cas d'une mémoire vive résistive M de type bipolaire, on utilise avantageusement une impulsion de tension du deuxième type de signe opposé à l'impulsion de tension du premier type. Dans le cas alternatif d'une mémoire vive résistive M de type unipolaire, on utilise avantageusement une impulsion de tension du deuxième type de même signe que l'impulsion de tension du premier type.

Si la valeur de conductance qui est lue lors de la deuxième sous-étape 106 de l'étape ii) appartient à l'intervalle de conductance précédemment choisi, la programmation de la mémoire vive résistive considérée est terminée. Si en revanche ladite valeur de conductance n'appartient pas à l'intervalle de conductance précédemment choisi, on réitère l'étape i). Les étapes i) et ii) sont répétées jusqu'à ce que la valeur de conductance de la mémoire vive résistive M appartienne à l'intervalle de conductance choisi. Chaque impulsion de tension du premier type appliquée lors de chaque étape i) a la même première durée et la même première amplitude. Chaque impulsion de tension du deuxième type appliquée lors de chaque étape ii) a la même deuxième durée et la même deuxième amplitude. On réalise donc la programmation d'un réseau de neurones artificiels en utilisant uniquement et au maximum deux types d'impulsions de tension.

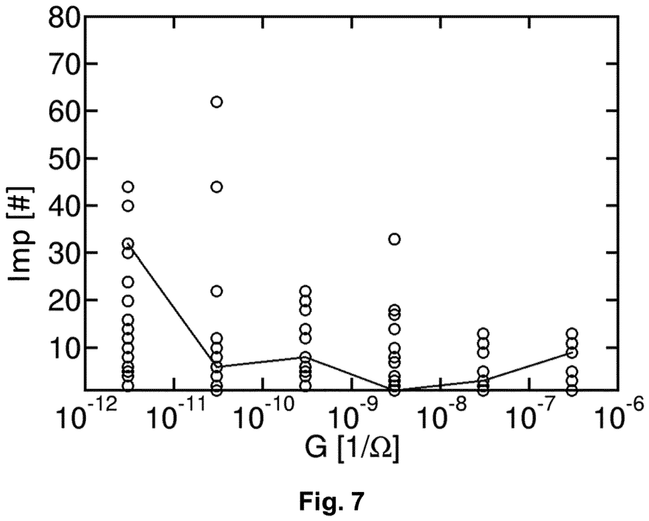

La figure 7 montre un graphique du nombre d'impulsions de tension nécessaires pour atteindre un intervalle de conductance donné d'une mémoire vive résistive. L'exemple particulier de la figure 7 montre que :

- dans le pire cas, une soixantaine d'impulsions de tension, soit une trentaine de cycles (impulsion de tension d'un premier type/impulsion de tension d'un deuxième type), sont utilisées pour parvenir à un intervalle de conductance déterminé ;
- dans le meilleur cas, une seule impulsion de tension (impulsion de tension d'un premier type ou impulsion de tension d'un deuxième type) est utilisée pour parvenir à un intervalle de conductance déterminé ;
- sur les six intervalles de conductance considérés dans cet exemple particulier, un intervalle a nécessité en moyenne une trentaine d'impulsions de tension pour être atteint et les cinq autres intervalles ont nécessité en moyenne dix impulsions de tension ou moins pour être atteints.

**Revendications**

1. Procédé (100) de programmation d'un réseau de neurones artificiels (N) ayant une pluralité de synapses artificielles (S), chaque synapse artificielle (S) étant une unique mémoire vive résistive (M), telle qu'une mémoire OxRAM ou CBRAM, en série avec un moyen de limitation de courant, la mémoire vive résistive (M) comportant une zone active (A) et des première et deuxième électrodes (E1, E2) de part et d'autre de la zone active, le procédé (100) de programmation comportant les étapes suivantes :

    - une étape (101) de détermination d'un nombre N d'intervalles de conductance, avec N un entier naturel supérieur ou égal à 3 ;
    - pour chaque mémoire vive résistive (M) :

        ∘ une étape (102) de choix d'un intervalle de conductance parmi les N intervalles de conductance précédemment déterminés ;
        ∘ une étape i) comprenant :

            ▪ une première sous-étape (103) d'application d'une impulsion de tension d'un premier type entre les première et deuxième électrodes (E1, E2) de ladite mémoire vive résistive (M), l'impulsion de tension du premier type ayant une première durée et une première amplitude, et
            ▪ une deuxième sous-étape (104) de lecture d'une valeur de conductance de ladite mémoire vive résistive (M) ;

        ∘ si ladite valeur de conductance n'appartient pas à l'intervalle de conductance précédemment choisi, une étape ii) comprenant :

            ▪ une première sous-étape (105) d'application d'une impulsion de tension d'un deuxième type entre les première et deuxième électrodes (E1, E2) de ladite mémoire vive résistive (M), l'impulsion de tension du deuxième type ayant une deuxième durée et une deuxième amplitude, et
            ▪ une deuxième sous-étape (106) de lecture d'une valeur de conductance de ladite mémoire vive résistive (M) ;

        ∘ si ladite valeur de conductance n'appartient pas à l'intervalle de conductance choisi, une étape selon laquelle on réitère l'étape i), les étapes i) et ii) étant répétées jusqu'à ce que la valeur de conductance de la mémoire vive résistive (M) appartienne à l'intervalle de conductance choisi ; chaque impulsion de tension du premier type appliquée lors de chaque étape i) ayant la même première durée et la même première amplitude, et chaque impulsion de tension du deuxième type appliquée lors de chaque étape ii) ayant la même deuxième durée et la même deuxième amplitude.

2. Procédé (100) de programmation d'un réseau de neurones artificiels selon la revendication 1 **caractérisé en ce que** chaque mémoire vive résistive (M) est une mémoire de type OxRAM.

3. Procédé (100) de programmation d'un réseau de neurones artificiels selon la revendication 1 **caractérisé en ce que** chaque mémoire vive résistive (M) est une mémoire de type CBRAM.

4. Procédé (100) de programmation d'un réseau de neurones artificiels selon l'une quelconque des revendications précédentes **caractérisé en ce qu'**on choisit le moyen de limitation de courant de chaque synapse artificielle (S) de manière que le courant traversant chaque mémoire vive résistive (M) est supérieur à 1 μA et inférieur ou égal à 20 μA.

5. Procédé (100) de programmation d'un réseau de neurones artificiels selon l'une quelconque des revendications précédentes **caractérisé en ce que** l'impulsion de tension du deuxième type est de signe opposé à l'impulsion de tension du premier type.

6. Procédé (100) de programmation d'un réseau de neurones artificiels selon l'une quelconque des revendications 1 à 5 **caractérisé en ce que** l'impulsion de tension du deuxième type est de même signe que l'impulsion de tension du premier type.

**Patentansprüche**

1. Programmierverfahren (100) eines künstlichen Neuronennetzes (N) mit einer Vielzahl von künstlichen Synapsen (S), wobei jede künstliche Synapse (S) ein einziger ohmscher Arbeitsspeicher (M), wie zum Beispiel ein Speicher OxRAM oder CBRAM, in Serie mit einem Strombegrenzungsmittel ist, wobei der ohmsche Arbeitsspeicher (M) einen aktiven Bereich (A) und erste und zweite Elektroden (E1, E2) auf jeder Seite des aktiven Bereichs umfasst, wobei das Programmierverfahren (100) die folgenden Schritte umfasst:

- einen Bestimmungsschritt (101) einer Anzahl N von Leitfähigkeitsintervallen, wobei N eine ganze natürliche Zahl größer als oder gleich 3 ist;
- für jeden ohmschen Arbeitsspeicher (M):

◦ einen Wahlschritt (102) eines Leitwertintervalls von den N zuvor bestimmten Leitwertintervallen;
◦ einen Schritt i), umfassend:

• einen ersten Anwendungsteilschritt (103) eines Spannungsimpulses eines ersten Typs zwischen der ersten und zweiten Elektrode (E1, E2) des genannten ohmschen Arbeitsspeichers (M), wobei der Spannungsimpuls vom ersten Typ eine erste Dauer und eine erste Amplitude hat, und
• einen zweiten Leseteilschritt (104) eines Leitwertes des genannten ohmschen Arbeitsspeichers (M);

◦ wenn der genannte Leitwert nicht zu dem zuvor gewählten Leitwertintervall gehört, einen Schritt ii), umfassend:

• einen ersten Anwendungsteilschritt (105) eines Spannungsimpulses eines zweiten Typs zwischen der ersten und zweiten Elektrode (E1, E2) des genannten ohmschen Arbeitsspeichers (M), wobei der Spannungsimpuls vom zweiten Typ eine zweite Dauer und eine zweite Amplitude hat, und
• einen zweiten Leseteilschritt (106) eines Leitwertes des genannten ohmschen Speichers (M);

◦ wenn der genannte Leitwert nicht zu dem gewählten Leitwertintervall gehört, einen Schritt, gemäß dem der Schritt i) wiederholt wird, wobei die Schritte i) und ii) wiederholt werden, bis der Leitwert des ohmschen Arbeitsspeichers (M) zu dem gewählten Leitwertintervall gehört; wobei jeder bei jedem Schritt i) angewendeter Spannungsimpuls vom ersten Typ dieselbe erste Dauer und dieselbe erste Amplitude hat und jeder Spannungsimpuls vom zweiten, bei jedem Schritt ii) angewendeten Typ dieselbe zweite Dauer und die dieselbe zweite Amplitude hat.

2. Programmierverfahren (100) eines künstlichen Neuronennetzes gemäß Anspruch 1, **dadurch gekennzeichnet, dass** jeder ohmsche Arbeitsspeicher (M) ein Speicher vom Typ OxRAM ist.

3. Programmierverfahren (100) eines künstlichen Neuronennetzes gemäß Anspruch 1, **dadurch gekennzeichnet, dass** jeder ohmsche Arbeitsspeicher (M) ein Speicher vom Typ CBRAM ist.

4. Programmierverfahren (100) eines künstlichen Neuronennetzes gemäß irgendeinem der voranstehenden Ansprüche, **dadurch gekennzeichnet, dass** das Strombegrenzungsmittel jeder künstlichen Synapse (S) derart ausgewählt ist, dass der jeden ohmschen Arbeitsspeicher (M) durchströmende Strom höher als 1 $\mu$A und niedriger als oder gleich 20 $\mu$A ist.

5. Programmierverfahren (100) eines künstlichen Neuronennetzes gemäß irgendeinem der voranstehenden Ansprüche, **dadurch gekennzeichnet, dass** der Spannungsimpuls vom zweiten Typ vom entgegengesetzten Zeichen des Spannungsimpulses vom ersten Typ ist.

6. Programmierverfahren (100) eines künstlichen Neuronennetzes gemäß irgendeinem der Ansprüche 1 bis 5, **dadurch gekennzeichnet, dass** der Spannungsimpuls vom zweiten Typ von demselben Zeichen ist wie der Spannungsimpuls vom ersten Typ.

**Claims**

1. Method (100) for programming an artificial neural network (N) having a plurality of artificial synapses (S), each artificial synapse (S) being a single resistive random-access memory (M), such as an OxRAM or CBRAM memory, in series with a current limitation means, the resistive random-access memory (M) comprising an active zone (A) and first and second electrodes (E1, E2) on either side of the active zone, the method (100) of programming comprising the following steps:

- a step (101) of determining a number N of conductivity intervals, with N a natural number greater than or equal to 3;
- for each resistive random-access memory (M):

  ∘ a step (102) of choosing a conductivity interval from the N conductivity intervals previously determined;
  ∘ a step i) comprising:

    • a first sub-step (103) of applying a voltage pulse of a first type between the first and second electrodes (E1, E2) of said resistive random-access memory (M), the voltage pulse of the first type having a first duration and a first amplitude, and
    • a second sub-step (104) of reading a conductivity value of said resistive random-access memory (M);

  ∘ if said conductivity value does not belong to the conductivity interval previously chosen, a step ii) comprising:

    • a first sub-step (105) of applying a voltage pulse of a second type between the first and second electrodes (E1, E2) of said resistive random-access memory (M), the voltage pulse of the second type having a second duration and a second amplitude, and
    • a second sub-step (106) of reading a conductivity value of said resistive random-access memory (M);

  ∘ if said conductivity value does not belong to the chosen conductivity interval, a step according to which the step i) is reiterated, the steps i) and ii) being repeated until the conductivity value of the resistive random-access memory (M) belongs to the chosen conductivity interval; each voltage pulse of the first type applied during each step i) having the same first duration and the same first amplitude, and each voltage pulse of the second type applied during each step ii) having the same second duration and the same second amplitude.

2. Method (100) for programming an artificial neural network according to claim 1 **characterised in that** each resistive random-access memory (M) is a memory of the OxRAM type.

3. Method (100) for programming an artificial neural network according to claim 1 **characterised in that** each resistive random-access memory (M) is a memory of the CBRAM type.

4. Method (100) for programming an artificial neural network according to any preceding claim **characterised in that** the current limitation means of each artificial synapse (S) is chosen in such a way that the current passing through each resistive random-access memory (M) is greater than 1 $\mu$A and less than or equal to 20 $\mu$A.

5. Method (100) for programming an artificial neural network according to any preceding claim **characterised in that** the voltage pulse of the second type is of the opposite sign to the voltage pulse of the first type.

6. Method (100) for programming an artificial neural network according to any of claims 1 to 5 **characterised in that** the voltage pulse of the second type has the same sign as the voltage pulse of the first type.

**Fig. 1**

**Fig. 2a**

**Fig. 2b**

**Fig. 2c**

Fig. 3

Fig. 4

**Fig. 5**

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. SURI et al.** Bio-inspired stochastic computing using binary CBRAM synapses. *IEEE Transactions on Electron Devices,* Juillet 2013, vol. 60 (7